# EUROPEAN PATENT SPECIFICATION

(11) **EP 3 038 730 B1**
(45) Date of publication and mention of the grant of the patent: **11.04.2018**
(21) Application number: 14784190.2
(22) Date of filing: 29.08.2014
(51) Int. Cl.: B01D 39/08

(54) **FILTER ELEMENT**
FILTERELEMENT
ÉLÉMENT FILTRANT

(30) Priority: 29.08.2013 GB 201315362
(43) Date of publication of application: 06.07.2016
(73) Proprietor: Clear Edge Germany GmbH, 47608 Geldern-Walbeck (DE)
(72) Inventor: BARON, Dominic, Bolton Lancashire BL6 7QZ (GB)
(74) Representative: Wilson Gunn
(86) International application number: PCT/EP2014/068407
(87) International publication number: WO 2015/028624

(56) References cited:
- EP-A2- 0 048 962
- US-A- 4 815 503
- US-A- 5 795 835

## Description

The present invention relates to a filter element (such as a filter cloth), a filtration apparatus (such as a large chamber filter press or a Lasta press) comprising a filter element, and use of a filter element in a filtration apparatus (such as a large chamber filter press or a Lasta press).

Filter elements often comprise woven fabric, that is a fabric comprising warp and weft yarns, wherein the weft is threaded through and interlaced with the warp. Warp yarns are typically longitudinal (i.e. run in the machine direction) and weft yarns are typically transverse (i.e. run perpendicular to the machine direction; i.e. the cross-machine direction). Such filter elements are known from documents US4815503 and EP0048962. Since woven structures possess an inherent degree of stretch, such filter elements are susceptible to elongation, particularly when used on large filter presses where the elements are placed under tension when subjected to the load of a heavy filter cake. This can mean significant elongation which results in a baggy filter element which has poor fit and can crease, resulting in poor sealing. Due to the high pressures involved in filtration, poor sealing is obviously highly disadvantageous. Furthermore, poor fit can also lead to the creation of points of increased wear on the filter element, resulting in shorter lifetimes or premature failure of the filter element through mechanical damage. Consequently it is desirable to reduce the susceptibility of filter elements to elongation, and/or to increase their modulus. In addition, filter elements can be susceptible to abrasion, for example from the filtrate. Such abrasion reduces the working life of the filter element. It may therefore be additionally desirable to improve the abrasion resistance of filter elements in order to prolong their working life.

According to a first embodiment of the present invention, there is provided a filter element comprising interlaced weft, and warp yarns and laid-in yarns, wherein:
the filter element comprises two layers of weft yams; with the laid-in yarns located between said layers of weft yams;
the laid-in yarns do not interlace with the weft yarns and run substantially parallel to the warp yams;
the weft yarns run substantially perpendicular to the warp yarns, and wherein;
the ratio of the laid-in yarns to warp yarns is at least 1:4.

According to a second embodiment of the present invention, there is provided a filtration apparatus, such as a large chamber filter press or a Lasta press, comprising a filter element according to the first embodiment.

According to a third embodiment of the present invention, there is provided the use of a filter element according to the first embodiment in a filtration apparatus such as a large chamber filter press or a Lasta press.

According to a fourth embodiment of the present invention, there is provided an assembly comprising a filter element according to the first embodiment and a substantially vertical filter plate, wherein the filter element is oriented such that the laid in yarns run substantially vertically down the filter plate.

The laid-in yarns of the present invention give rise to filter elements having an increased modulus, i.e. a reduced tendency to elongation. Without wishing to be bound by theory, it is believed that the laid-in yarns reduce elongation as they do not interlace with any weft yarns, so that any elongation effects due to fabric crimp are reduced. Using laid in yarns in the warp direction, low load elongation values of 0.5% or less @400N/5cm are achievable according to DIN EN ISO (13934) without adversely affecting filtration performance.

In the case where it is desirable to additionally improve abrasion resistance, the weft yarns can comprise an abrasion resistant yarn, for example polyamide, e.g. NYLON. The weft yarns comprising polyamide, e.g. NYLON, give rise to filter elements having improved abrasion resistance.

Filter elements typically have top and bottom surfaces, wherein one or both of these surfaces can be used for filtration. Preferably the filter element has weft yarns comprising polyamide, e.g. NYLON as the predominant yarns on both the top and bottom surfaces of the filter element, as this gives particularly improved abrasion resistance. When the filter element has a double-faced sateen weave, e.g. a weave of double faced construction comprising polyamide, e.g. NYLON, yarns on both surfaces, abrasion resistance is particularly improved.

The weft yarns comprising polyamide, e.g. NYLON, may comprise at least 80% polyamide, e.g. NYLON, preferably 100% polyamide, e.g. NYLON. The laid-in yarns do not interlace with any weft yarns.

The ratio of laid-in yarns to warp yarns is at least 1:4, preferably at least 1:3, more preferably at least 1:2, most preferably at least 1:1, but it can also be 2:3. The laid-in yarns in one embodiment comprise any of the following either alone or in combination:-polypropylene (PP), polyester (PET), polyethylene (PE), polybutylene terephthalate (PBT), polyphenylene sulfide (PPS) and/or aramid, such as KEVLAR, materials. In one embodiment their linear density is from 150 to 4400 dtex (grams/10,000m). In another embodiment this is 1100 to 2200 dtex. The laid-in yarns can be multifilament staple or monofilament.

The warp yarns typically comprise any of the following either alone or in combination:- PP, PET, PE, PBT, PPS or aramid, eg KEVLAR, materials. Their linear density in one embodiment may be in the range from 150 to 4400 dtex. In another embodiment this is in the range from1100 to 2200 dtex. The warp yarns can be multifilament staple or monofilament, and/or the warp yarns can be woven in any of plain weave, all twill combinations, or all satin combinations.

The weft yarns may comprise an abrasion resistant yarn, preferably PA, e.g. NYLON, and may also or alternatively comprise PP, PET, PE, PBT, PPS or aramid (e.g. KEVLAR) material. In one embodiment the weft yarns consist essentially of, or consist of, PA (e.g. NYLON). In one embodiment their linear density is from 150 to 4400 dtex, and in another embodiment from 1100 to 2200 dtex. The weft yarns may be multifilament staple or monofilament.

An abrasion resistant coating, for example of glue or resin, may optionally be applied to the filter element to increase lifetime. This coating may be (but is not limited to), for example, a two part epoxy or similar. Typically, the coating is an aqueous Phenol Formaldehyde resole system. The coating can also be impregnated into the fabric of the filter element.

The coating can typically be applied using a coating machine comprising a simple Knife over Air system, with a 'J' blade, which causes the resin to be forced into the filter element, thus giving an impregnation, rather than a discrete coating on top of the filter element. The coating should not, however, markedly alter the permeability of the filter element.

Usually the filter element is first coated and dried, and then cured preferably by passing down a stenter. Afterwards, hot calandering, at for example 145°C, is preferred.

When fabricating the filter element, due consideration must be observed with regard to correct orientation of the woven fabric, so as to gain maximum benefit from the inherent resistance to elongation in the warp direction. That is, the filter element should be oriented such that the warp yarns and laid-in yarns are present in the direction which is subjected to the highest loads. For example, in the case of a plate and frame filter press, the filter element should be constructed such that the warp and laid-in yarns are oriented in a top to bottom orientation, with the weft yarns being oriented in the left to right direction.

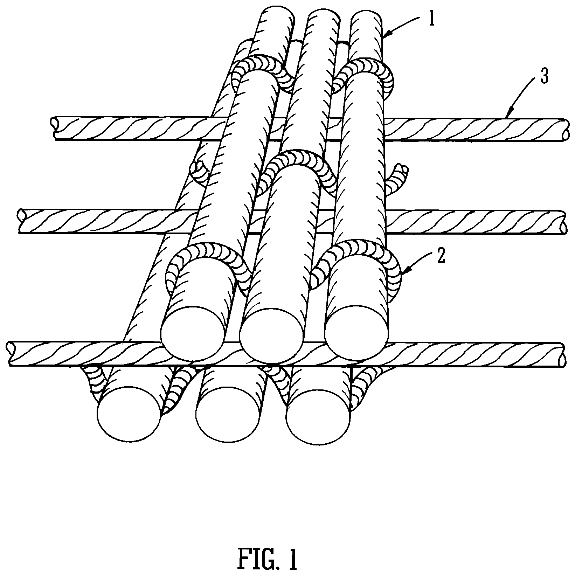

The present invention will now be illustrated, by way of example only, by reference to Figure 1 which shows a schematic diagram of a filter element according to the invention.

In Figure 1, two layers of weft yarns 1 and warp yarns 2 are interlaced to create a fabric, wherein the weft yarns run perpendicular to the machine direction and the warp yarns run parallel to it. Laid-in yarns 3 placed in-between the two weft layers also run parallel to the machine direction. There is a laid-in yarn present between each pair of warp yarns, such that the ratio of laid-in yarns to warp yarns is 1:1. The weft yarns 1 may comprise an abrasion resistant yarn such as polyamide, e.g. NYLON.

It is to be understood that the above described embodiment is by way of illustration only. Many modifications and variations are possible. For example, more layers of weft may be included.

## Claims

1. A filter element comprising interlaced weft, and warp yarns and laid-in yarns, wherein:
the filter element comprises two layers of weft yams; with the laid-in yarns located between said layers of weft yams;
the laid-in yarns do not interlace with the weft yarns and run substantially parallel to the warp yams;
the weft yarns run substantially perpendicular to the warp yarns, and wherein;
the ratio of the laid-in yarns to warp yarns is at least 1:4.

2. A filter element according to claim 1, wherein the ratio of laid-in yarns to warp yarns is approximately 1:1.

3. A filter element according to claim 1 or claim 2, wherein the laid-in, warp and/or weft yarns comprise any of the following either alone or in combination:-PP, PET, PE, PBT, PPS and/or Kevlar materials.

4. A filter element according to any preceding claim, wherein the weft yarns consist essentially of an abrasion resistant yarn.

5. A filter element according to claim 4, wherein the abrasion resistant yarn is polyamide.

6. A filter element according to any preceding claim, wherein the filter element is a filter cloth.

7. A filter element according to any preceding claim, wherein the filter element additionally comprises an abrasion resistant coating.

8. A filtration apparatus comprising a filter element according to any of claims 1-7.

9. A filtration apparatus according to claim 8 wherein the filtration apparatus is a filter press or a Lasta press.

10. Use of a filter element according to any of claims 1-7 in a filtration apparatus.

11. Use of a filter element according to claim 10, wherein the filtration apparatus is a filter press or a Lasta press.

12. Use of a filter element according to either of claims 10 or 11, wherein the filter element is a filter cloth.

13. An assembly comprising a filter element according to any of claims 1-7 and a substantially vertical filter plate, wherein the filter element is oriented such that the laid-in yarns run substantially vertically down the filter plate.

## Patentansprüche

1. Filterelement umfassend miteinander verschränkte Schuss- und Kettgarne sowie Einlegegarne, wobei:
das Filterelement zwei Schichten von Schussgarnen umfasst, wobei die Einlegegarne zwischen den Schichten von Schussgarnen angeordnet sind;
die Einlegegarne nicht mit den Schussgarnen verschränkt sind und im Wesentlichen parallel zu den Kettgarnen verlaufen;
die Schussgarne im Wesentlichen senkrecht zu den Kettgarnen verlaufen, und wobei
das Verhältnis von Einlegegarnen zu Kettgarnen zumindest 1 : 4 beträgt.

2. Filterelement nach Anspruch 1, wobei das Verhältnis von Einlegegarnen zu Kettgarnen ungefähr 1 : 1 beträgt.

3. Filterelement nach Anspruch 1 oder Anspruch 2, wobei die Einlege-, Kett- und/oder Schussgarne beliebige der Folgenden entweder allein oder in Kombination umfassen: PP, PET, PE, PBT, PPS und/oder Kevlar-Materialien.

4. Filterelement nach einem der vorhergehenden Ansprüche, wobei die Schussgarne im Wesentlichen aus einem abriebfesten Garn bestehen.

5. Filterelement nach Anspruch 4, wobei das abriebfeste Garn Polyamid ist.

6. Filterelement nach einem der vorhergehenden Ansprüche, wobei das Filterelement ein Filtergewebe ist.

7. Filterelement nach einem der vorhergehenden Ansprüche, wobei das Filterelement zusätzlich eine abriebfeste Beschichtung umfasst.

8. Filtrationsvorrichtung umfassend ein Filterelement nach einem der Ansprüche 1 bis 7.

9. Filtrationsvorrichtung nach Anspruch 8, wobei die Filtrationsvorrichtung eine Filterpresse oder eine LASTA-Presse ist.

10. Verwendung eines Filterelements nach einem der Ansprüche 1 bis 7 in einer Filtrationsvorrichtung.

11. Verwendung eines Filterelements nach Anspruch 10, wobei die Filtrationsvorrichtung eine Filterpresse oder eine LASTA-Presse ist.

12. Verwendung eines Filterelements nach einem der Ansprüche 10 oder 11, wobei das Filterelement ein Filtergewebe ist.

13. Anordnung umfassend ein Filterelement nach einem der Ansprüche 1 bis 7 und eine im Wesentlichen vertikale Filterplatte, wobei das Filterelement derart ausgerichtet ist, dass die Einlegegarne im Wesentlichen senkrecht die Filterplatte hinab verlaufen.

## Revendications

1. Elément filtrant, comprenant entrelacés des fils de chaîne et de trame et des fils d'insertion, dans lequel
l'élément filtrant comprenant deux couches de fils de chaîne; les fils d'insertion étant disposés entre les couches de fils de chaîne;
les fils d'insertion ne s'entrelacent pas avec les fils de chaîne et courent sensiblement parallèlement au fils de trame;
les fils de chaîne courent sensiblement perpendiculairement aux fils de trame, et dans lequel;
le rapport des fils d'insertion aux fils de trame est d'au moins 1:4.

2. Elément filtrant suivant la revendication 1, dans lequel le rapport des fils d'insertion aux fils de trame est d'environ 1:1.

3. Elément filtrant suivant la revendication 1 ou la revendication 2, dans lequel les fils d'insertion de trame et/ou de chaîne comprennent l'une quelconque des matières suivantes, seules ou en combinaison : -PP, PET, PE, PBT, PPS et/ou kevlar.

4. Elément filtrant suivant l'une quelconque des revendications précédentes, dans lequel les fils de chaîne consistent essentiellement en un fil résistant à l'abrasion.

5. Elément filtrant suivant la revendication 4, dans lequel le fil résistant à l'abrasion est en polyamide.

6. Elément filtrant suivant l'une quelconque des revendications précédentes, dans lequel l'élément filtrant est un drap de presse.

7. Elément filtrant suivant l'une quelconque des revendications précédentes, dans lequel l'élément filtrant comprend en outre un revêtement résistant à l'abrasion.

8. Installation de filtration comprenant un élément filtrant suivant l'une quelconque des revendications 1 à 7.

9. Installation de filtration suivant la revendication 8, dans laquelle l'installation de filtration est un filtre presse ou un filtre presse Lasta.

10. Utilisation d'un élément filtrant suivant l'une quelconque des revendications 1 à 7, dans une installation de filtration.

11. Utilisation d'un élément filtrant suivant la revendication 10, dans laquelle l'installation de filtration est un filtre presse ou un filtre presse Lasta.

12. Utilisation d'un élément filtrant suivant l'une quelconque des revendications 10 ou 11, dans laquelle l'élément filtrant est un drap de presse.

13. Ensemble comprenant un élément filtrant suivant l'une quelconque des revendications 1 à 7 et une plaque de filtre sensiblement verticale, l'élément filtrant étant orienté de manière à ce que les fils d'insertion courent vers le bas, sensiblement verticalement, de la plaque de filtre.
